(19) **Europäisches Patentamt / European Patent Office / Office européen des brevets**

(11) **EP 4 155 714 B1**

(12) **EUROPEAN PATENT SPECIFICATION**

(45) Date of publication and mention
of the grant of the patent:
**18.12.2024 Bulletin 2024/51**

(21) Application number: **21808066.1**

(22) Date of filing: **07.04.2021**

(51) International Patent Classification (IPC):
*G01N 19/02* (2006.01)    *G01W 1/00* (2006.01)
*B60W 40/068* (2012.01)    *G01M 17/02* (2006.01)
*B60T 8/172* (2006.01)

(52) Cooperative Patent Classification (CPC):
**B60L 3/102; B60L 15/02; B60T 8/172;**
**B60W 40/068;** B60L 2220/42; B60L 2240/429;
B60L 2240/461; B60L 2240/465; B60L 2240/645;
B60L 2240/647; B60L 2270/145; B60T 2210/12;
B60W 2556/45; Y02T 10/72

(86) International application number:
**PCT/JP2021/014702**

(87) International publication number:
**WO 2021/235123 (25.11.2021 Gazette 2021/47)**

(54) **DEVICE FOR DETERMINING A ROAD SURFACE CONDITION**

VORRICHTUNG ZUR BESTIMMUNG DES ZUSTANDS EINER FAHRBAHN

DISPOSITIF POUR DÉTERMINER L'ÉTAT DE LA CHAUSSÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2020 JP 2020087903**

(43) Date of publication of application:
**29.03.2023 Bulletin 2023/13**

(73) Proprietor: **DENSO CORPORATION
Kariya-city, Aichi 448-8661 (JP)**

(72) Inventors:
• **LIU, Haibo
Kariya-city, Aichi 4488661 (JP)**

• **KAWANO, Takayuki
Kariya-city, Aichi 4488661 (JP)**

(74) Representative: **TBK
Bavariaring 4-6
80336 München (DE)**

(56) References cited:
| | |
|---|---|
| **EP-A2- 0 747 691** | **EP-A2- 0 891 904** |
| **DE-A1- 102018 215 465** | **JP-A- 2005 073 447** |
| **JP-A- 2005 073 447** | **JP-A- 2015 229 433** |
| **JP-A- H 102 813** | **JP-A- H1 120 649** |
| **JP-A- H1 123 425** | **JP-A- H1 178 843** |
| **US-A1- 2018 118 209** | |

**Description**

TECHNICAL FIELD

The present invention relates to evaluation apparatuses for evaluating the condition of a road surface on which vehicles are traveling.

BACKGROUND

Let us assume that a vehicle is traveling on a frozen road surface. In this assumption, a coefficient of friction between each wheel and the frozen road surface becomes extremely lower, causing the vehicle to be likely to skid. Even for a skilled driver, it may be difficult to drive a vehicle safely on such a low friction-coefficient road surface.

Autonomous vehicles, which can autonomously perform some or all driving maneuvers, have been developing recently. Whenever traveling, such an autonomous vehicle requires an improved robustness against any disturbances for the achievement of safe and security traveling. In order to satisfy the requirement, such an autonomous vehicle preferably evaluates the condition of a road surface on which the autonomous vehicle is traveling.

From this viewpoint, JP 2019-99058 A discloses a road-surface condition evaluation apparatus for detecting, based on the characteristics of a resonant oscillation of, for example, a drive shaft of a vehicle, a $\mu$-gradient of a road surface; the $\mu$-gradient of a road surface shows the condition of the road surface.

Furthermore, EP 0 747 691 A2 refers to an apparatus and method for detecting friction characteristics, wherein a wheel resonant system includes a vehicle body, a road surface and at least a wheel. A vibrating system generates an exciting force that contains one of the resonant frequency of said vibrating system and the frequency component in the vicinity of said resonant frequency and exciting said vibrating system by said exciting force. A vibration response detecting means detects the quantity of state of the vibration response of said vibrating system excited by said exciting force generating means, and resonant characteristics calculating means is provided for calculating the resonant characteristics of said vibrating system on the basis of the quantity of state of the exciting force generated by said exciting force generating means and the quantity of state of the vibration response detected by said vibration response detecting means.

SUMMARY

The road-surface condition evaluation apparatus disclosed in JP 2019-99058 A is configured to, when a resonant oscillation of, for example, the drive shaft occurs naturally while the vehicle is traveling on the road surface, analyze the characteristics of the resonant oscillation to thereby evaluate the $\mu$-gradient of the road surface; the $\mu$-gradient of the road surface shows the condition of the road surface.

Unfortunately, the road-surface condition evaluation apparatus disclosed in JP 2019-99058 A merely analyzes the characteristics of the resonant oscillation that occurs naturally while the vehicle is traveling on the road surface. For this reason, it may be difficult to evaluate the condition of the road surface with high accuracy depending on the traveling state of the vehicle. Additionally, the road-surface condition evaluation apparatus disclosed in JP 2019-99058 A essentially requires the occurrence of a resonance oscillation whose resonant frequency is likely to be perceptible by one or more occupants. This may result in the vehicle being uncomfortable for the one or more occupants.

It is an object of the present invention to provide evaluation apparatuses, each of which is capable of evaluating the condition of a road surface with higher accuracy.

This object is achieved by an evaluation apparatus according to claim 1. Further features and advantageous modifications are shown in the dependent claims.

An evaluation apparatus according to the present invention is operative to evaluate a condition of a road surface on which a vehicle having at least one wheel is traveling. The evaluation apparatus includes an oscillation unit configured to output an oscillation command that causes the at least one wheel of the vehicle to oscillate, and an oscillation obtainer configured to obtain an oscillation of rotation of the at least one wheel in response to the output of the oscillation command. The evaluation apparatus includes an evaluation unit configured to perform an evaluation of the condition of the road surface in accordance with the oscillation command and the oscillation obtained by the oscillation obtainer, wherein the evaluation of the condition of the road surface performed by the evaluation unit includes whether the condition of the road surface is a low-friction condition or a high-friction condition. The evaluation unit is configured to calculate a reference waveform that represents a waveform of a predicted oscillation that is predicted to occur in rotation of the at least one wheel based on the oscillation command, calculate a first attenuation rate of a waveform of the oscillation obtained by the oscillation obtainer, and a second attenuation rate of the reference waveform, and compare the first attenuation rate with the second attenuation rate to accordingly determine whether the condition of the road surface is the low-friction condition or the high-friction condition

That is, the evaluation unit of the evaluation apparatus configured set forth above performs an evaluation of the condition of the road surface in accordance with the oscillation command and the oscillation obtained by the oscillation obtainer.

The inventors of the present invention have demonstrated that an oscillation of a rotational speed of the at least one wheel based on the oscillation command for each target road surface is more likely to decay as a friction coefficient of the corresponding target road surface becomes smaller.

For this reason, if an attenuation rate of the oscillation actually obtained by the oscillation obtainer is smaller than that of the predicted oscillation predicted based on the oscillation command, it is possible to evaluate that the condition of the road surface is in a low-friction condition.

That is, the above evaluation method outputs the oscillation command to thereby cause the at least one wheel of the vehicle to oscillate. The above evaluation method uses at least one specific frequency of the oscillation of the at least one wheel, which is different from frequencies of natural oscillations that naturally occur.

This configuration therefore makes it possible to obtain an evaluation result about the road surface with higher accuracy as compared with a method of analyzing a resonant oscillation that occurs naturally as described in JP 2019-99058 A.

In particular, the oscillation unit of the evaluation apparatus is configured to output the oscillation command that causes at least one frequency of the oscillation of rotation of the at least one wheel to be different from at least one resonant frequency of the vehicle. This configuration therefore makes it possible to evaluate the condition of the road surface while preventing one or more occupants of the vehicle from having feeling discomfort.

The present invention therefore offers the evaluation apparatus capable of evaluating the condition of the road surface with higher accuracy.

BRIEF DESCRIPTION OF THE DRAWINGS

Fig. 1 is a schematic diagram of a vehicle in which an evaluation apparatus of the first embodiment is installed;
Fig. 2 is a block diagram of the evaluation apparatus of the first embodiment;
Fig. 3 is a flowchart illustrating an evaluation routine carried out by the evaluation apparatus according to the first embodiment;
Figs. 4A and 4B are a joint graph illustrating an oscillation command and a vibration control command;
Fig. 5 is a graph used to describe a method of calculating an attenuation rate;
Fig. 6 is a graph used to describe a method of calculating a $\mu$-gradient;
Fig. 7 is a schematic diagram of a vehicle in which an evaluation apparatus of the second embodiment is installed;
Fig. 8 is a flowchart illustrating an evaluation routine carried out by the evaluation apparatus according to the second embodiment;
Fig. 9 is a block diagram of an evaluation apparatus of the third embodiment; and
Fig. 10 is a flowchart illustrating an evaluation routine carried out by the evaluation apparatus according to the third embodiment;

DETAILED DESCRIPTION OF EMBODIMENTS

The following describes exemplary embodiments of the present invention with reference to the accompanying drawings. For the sake of easy understanding, in the accompanying drawings, description of like parts, to which like reference characters are assigned, are omitted or simplified to avoid redundant description.

First embodiment

The following describes an evaluation apparatus 10 according to the first embodiment.

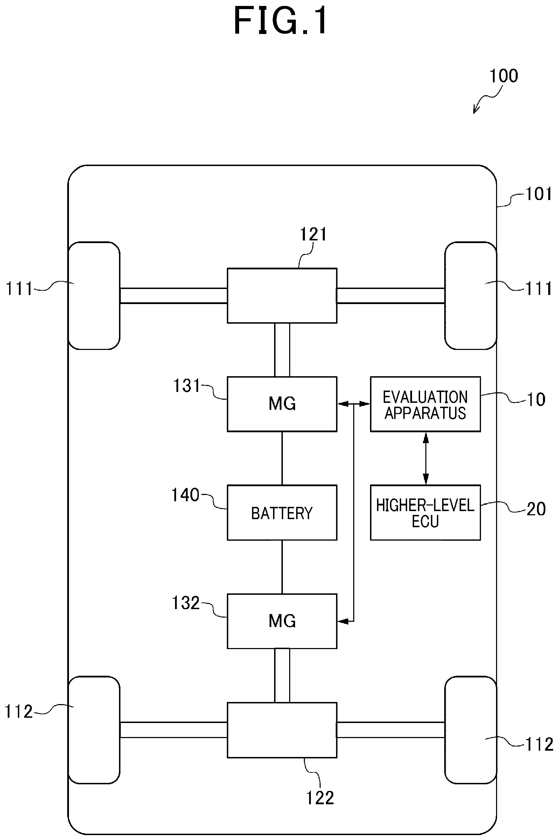

The evaluation apparatus 10 is designed to be installable in a vehicle 100, and is configured to evaluate the condition of a road surface on which the vehicle 100 is traveling. Before description of the evaluation apparatus 10, the following describes the configuration of the vehicle 100 with reference to Fig. 1.

The vehicle 100 according to the first embodiment is configured as an autonomous vehicle that autonomously performs all driving maneuvers required for the vehicle 100 to travel. The vehicle 100 can be configured, as another example, as a vehicle in which some or all of driving maneuvers are performed by one or more occupants. Referring to Fig. 1, the vehicle 100 includes a body 101, first pair of wheels 111 and a second pair of wheels 112, rotary electric machines 131 and 132, and a battery 140.

The body 101 of the vehicle 100 constitutes a main part of the vehicle 100.

The first pair of wheels 111 is a pair of front wheels mounted to a front portion of the body 101, and the second pair of wheels 112 is a pair of rear wheels mounted to a rear portion of the body 101. That is, the vehicle 100 has a total of four wheels 111 and 112 mounted thereto. All the wheels 111 and 112 according to the first embodiment serve as driving wheels.

The rotary electric machine 131 serves as an apparatus for generating, based on electrical power supplied from the battery 140, drive power for rotating the wheels 111, i.e., for traveling the vehicle 100. The rotary electric machine 131 is configured as a motor-generator. The drive power generated by the rotary electric machine 131 is transferred through a powertrain 121 of the body 101 to each of the wheels 111, and the drive power transferred to each wheel 111 causes the corresponding wheel 111 to rotate. An inverter, which is unillustrated in Fig. 1, performs electrical-power transfer between the battery 140 and the rotary electric machine 131. The rotary electric machine 131 according to the first embodiment serves as a first rotary electric machine.

The rotary electric machine 132 serves as an apparatus for generating, based on electrical power supplied from the battery 140, drive power for rotating the wheels 112. Like the rotary electric machine 131, the rotary electric machine 132 is configured as a motor-generator. The drive power generated by the rotary electric machine 132 is transferred through a powertrain 122 of the body 101 to each of the wheels 112, and the drive power transferred to each wheel 112 causes the corresponding wheel 112 to rotate. An inverter, which is unillustrated in Fig. 1, performs electrical-power transfer between the battery 140 and the rotary electric machine 132. The rotary electric machine 132 according to the first embodiment serves as a second rotary electric machine.

As described above, the vehicle 100 includes the rotary electric machine 131 serving as a first rotary electric machine, and the rotary electric machine 132 serving as a second rotary electric machine. The rotary electric machine 131 is configured to generate drive power for rotating at least one wheel, i.e., the wheels 111, allocated for the rotary electric machine 131 in the four wheels of the vehicle 100, and the rotary electric machine 132 is configured to generate drive power for rotating at least another wheel, i.e., the wheels 112, allocated for the rotary electric machine 132 in the four wheels of the vehicle 100.

The battery 140 consists of a storage battery, such as a lithium-ion battery, for supplying, to each of the rotary electrical machines 131 and 132, the electrical power for driving the corresponding one of the rotary electrical machines 131 and 132.

The vehicle 100, which is configured as an autonomous vehicle, includes a steering apparatus for autonomously performing steering of the vehicle 100, and a braking apparatus for autonomously braking the vehicle 100; these steering and braking apparatuses are unillustrated in Fig. 1.

The vehicle 100 includes, in addition to the evaluation apparatus 10, a higher-level ECU 20. Each of the evaluation apparatus 10 and the higher-level ECU 20 is configured as a computer system comprised of a CPU, a ROM, a RAM, and one or more other peripheral devices. The higher-level ECU 20 performs various tasks required for autonomous driving of the vehicle 100. The various tasks required for autonomous driving of the vehicle 100 can include a task of selecting, in a plurality of available routes, a route along which the vehicle 100 is going to travel. The higher-level ECU 20 and the evaluation apparatus 10 are configured to communicate with one another to thereby cooperatively perform the various tasks required for autonomous driving of the vehicle 100.

That is, the higher-level ECU 20 according to the first embodiment is configured not to perform all the tasks required for autonomous driving of the vehicle 100, and therefore the evaluation apparatus 10 according to the first embodiment is configured to perform one or more tasks in all the tasks required for autonomous driving of the vehicle 100; the one or more tasks are allocated for the evaluation apparatus 10. For example, the one or more tasks allocated for the evaluation apparatus 10 can include a task of transmitting a control signal to each of the unillustrated steering apparatus and the unillustrated braking apparatus. The one or more tasks allocated for the evaluation apparatus 10 can also include a task of adjusting the drive power generated by each of the rotary electric machines 131 and 132.

Specifically, the evaluation apparatus 10 according to the first embodiment serves as both an apparatus for evaluating the condition of a road surface on which the vehicle 100 is traveling and an apparatus for performing travel control of the vehicle 100.

The above task-sharing configuration between the higher-level ECU 20 and the evaluation apparatus 10 according to the first embodiment is an example of various configurations between the higher-level ECU 20 and the evaluation apparatus 10. For example, the evaluation apparatus 10 can be configured to perform only the task for evaluating the condition of a road surface on which the vehicle 100 is traveling, and the higher-level ECU 20 can be configured to perform the travel-control tasks of the vehicle 100.

The evaluation apparatus 10 and the higher-level ECU 20 can be configured as a single control apparatus. How the tasks required for autonomous driving of the vehicle 100 are allocated for the evaluation apparatus 10 and the higher-level ECU 20 can be freely determined. Similarly, each of the evaluation apparatus 10 and the higher-level ECU 20 can include a freely selected one of various configurations.

The following describes additional components of the vehicle 100.

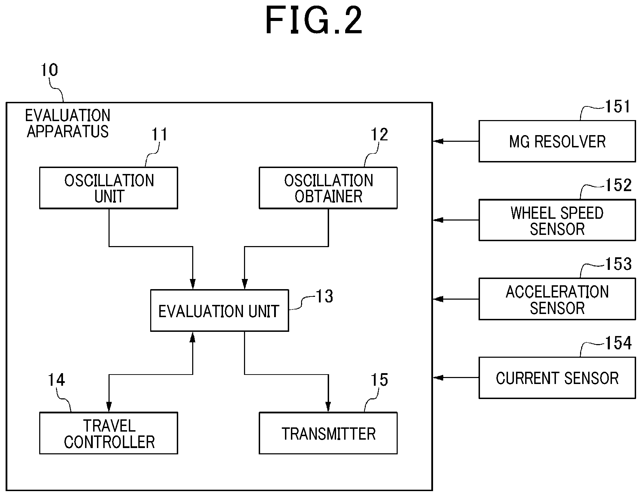

Referring to Fig. 2, the vehicle 100 includes MG resolvers 151, wheel speed sensors 152, an acceleration sensor 153, and current sensors 154.

Each of the MG resolvers 151 is configured to measure the number of revolutions per unit time of an unillustrated output shaft of the corresponding one of the rotary electric machines 131 and 132. Specifically, the MG resolvers 151 are provided for the respective output shafts of the rotary electric machines 131 and 132. That is, two MG resolvers 151 are installed in the vehicle 100, but Fig. 2 schematically illustrates a single block representing the MG resolvers 151.

The number of revolutions per unit time of the output shaft of the rotary electric machine 131 will be simply referred to as a rotational speed of the rotary electric machine 131. Similarly, the number of revolutions per unit time of the output shaft of the rotary electric machine 132 will be simply referred to as a rotational speed of the rotary electric machine 132. A signal indicative of the rotational speed of each of the rotary electric machines 131 and 132 measured by the corresponding one of the MG resolvers 151 is outputted therefrom to be inputted to the evaluation apparatus 10.

Each of the wheel speed sensors 152 is configured to measure the number of revolutions per unit time of the corresponding one of the wheels 111 and 112. Specifically, the wheel speed sensors 152 are provided for the respective four wheels 111 and 112. That is, four wheel speed sensors 152 are installed in the vehicle 100, but Fig. 2 schematically illustrates a single block representing the wheel speed sensors 152.

The number of revolutions per unit time of each wheel 111 will be simply referred to as a rotational speed of the corresponding wheel 111. Similarly, the number of revolutions per unit time of each wheel 112 will be simply referred to as a rotational speed of the corresponding wheel 112. A signal indicative of the rotational speed of each of the wheels 111 and 112 measured by the corresponding one of the wheel speed sensors 152 is outputted therefrom to be inputted to the evaluation apparatus 10.

The acceleration sensor 153, which is mounted to the body 101, is configured to measure values of acceleration of the vehicle 100. Specifically, the acceleration sensor 153 is configured as a six-axis acceleration sensor capable of measuring

1. Values of acceleration in the respective (i) pitch (left-right) axis, (ii) roll (front-rear) axis, and (iii) yaw (vertical) axis of the vehicle 100
2. Values of rotational acceleration about the respective pitch axis, roll axis, and yaw axis of the vehicle 100

Signals representing the respective values of acceleration of the vehicle 100 measured by the six-axis acceleration sensor 153 are outputted therefrom to be inputted to the evaluation apparatus 10.

Each of the current sensors 154 is configured to measure a drive current supplied to the corresponding one of the rotary electric machines 131 and 132. Specifically, the current sensors 154 are provided for the respective rotary electric machines 131 and 132. That is, two current sensors 154 are installed in the vehicle 100, but Fig. 2 schematically illustrates a single block representing the current sensors 154.

A signal indicative of the drive current supplied to the rotary electric machine 131 measured by one of the current sensors 154 is outputted therefrom to be inputted to the evaluation apparatus 10. Similarly, a signal indicative of the drive current supplied to the rotary electric machine 132 measured by the other of the current sensors 154 is outputted therefrom to be inputted to the evaluation apparatus 10.

Next, the following describes the configuration of the evaluation apparatus 10 with reference to Fig. 2.

Referring to Fig. 2, the evaluation apparatus 10 includes, as block modules each representing a corresponding function, an oscillation unit 11, an oscillation obtainer 12, an evaluation unit 13, a travel controller 14, and a transmitter 15.

The oscillation unit 11 is configured to output an oscillation command that causes rotation of each wheel 111 to oscillate. An oscillation of rotation of each wheel 111 means oscillation of the number of revolutions per unit time, i.e., the rotational speed, of a rotational shaft of the corresponding wheel 111. An oscillation of the number of revolutions per unit time, i.e., the rotational speed, of the rotational shaft of each wheel 111 will also be referred to as a rotational-speed oscillation of the corresponding wheel 111.

The oscillation unit 11 outputs, as the oscillation command for each wheel 111, command values for the drive current to be supplied to the rotary electric machine 131, so that the outputted command values for the drive current supplied to the rotary electric machine 131 are inputted to the inverter connected to the rotary electric machine 131. That is, the oscillation command for each wheel 111 represents a signal, which is outputted from the oscillation unit 11, for controlling the operation of the rotary electric machine 131. The oscillation command for each wheel 111 can include any command to be outputted to any component that can cause the rotational speed of the corresponding wheel 111 to oscillate.

Adjustment of the drive current to be supplied to the rotary electric machine 131 in accordance with the oscillation command from the oscillation unit 11 causes the rotational speed of each wheel 111 to oscillate. As described later, the task of outputting the oscillation command is carried out by the oscillation unit 11 when the evaluation apparatus 10 performs an evaluation of the condition of a road surface.

The oscillation unit 11 is also configured to output a command that is similar to the oscillation command. That is, the command outputted from the oscillation unit 11 causes the rotational speed of each wheel 112 to oscillate.

The oscillation unit 11 outputs, as the command for each wheel 112, command values for the drive current to be supplied to the rotary electric machine 132, so that the outputted command values for the drive current supplied to the rotary electric machine 132 are inputted to the inverter connected to the rotary electric machine 132. Adjustment of the drive current to be supplied to the rotary electric machine 132 in accordance with the command from the oscillation unit 11 causes the rotational speed of each wheel 112 to oscillate.

As described later, the command for each wheel 112 represents a signal, which is outputted from the oscillation unit 11 at the same timing as the oscillation command, for controlling, i.e., suppressing, a vibration of the body 101 due to the oscillation command. The command outputted from the oscillation unit 11 to the inverter connected to the rotary electric machine 132 will also be referred to as a vibration control command.

The oscillation obtainer 12 is configured to obtain information about an oscillation of rotation of each wheel 111, i.e., an oscillation of the rotational speed of each wheel 111, in response to the output of the oscillation command from the oscillation unit 11.

For example, the oscillation obtainer 12 can directly obtain, as the information about an oscillation of the rotational speed of each wheel 111, the waveform of the oscillation of the rotational speed of the corresponding wheel 111 itself. Alternatively, the oscillation obtainer 12 can obtain the information about an oscillation of the rotational speed of each wheel 111 indirectly based on the waveform of another physical quantity that correlates with the waveform of the oscillation of the rotational speed of the corresponding wheel 111. The waveform of another physical quantity that correlates with the waveform of the oscillation of the rotational speed of each wheel 111 can include the waveform of an oscillation of the drive shaft included in the vehicle 100.

The oscillation obtainer 12 according to the first embodiment is configured to obtain, as the waveform of an actual oscillation of the rotational speed of each wheel 111, the waveform indicative of how the rotational speed of the rotary electric machine 131 measured by the corresponding MG resolver 151 changes over time.

As an example, the oscillation obtainer 12 can be configured to convert the waveform, which represents how the rotational speed of the rotary electric machine 131 measured by the corresponding MG resolver 151 changes over time, into another waveform that matches the waveform of an actual oscillation of the rotational speed of each wheel 111, and thereafter obtain the converted waveform indicative of how the rotational speed of the rotary electric machine 131 measured by the corresponding MG resolver 151 as the waveform of an oscillation of the rotational speed of each wheel 111. In this example, the oscillation obtainer 12 can include a transfer function that represents a correlative relationship between (i) values, i.e., input values, of the rotational speed of the rotary electric machine 131 measured by the corresponding MG resolver 151 and (ii) respective corresponding values, i.e., output values, of the rotational speed of each wheel 111. That is, the oscillation obtainer 12 obtains, based on how the rotational speed of the rotary electric machine 131 changes over time, an oscillation of the rotational speed of each wheel 111.

The oscillation obtainer 12 can obtain, directly from change of the rotational speed of each wheel 111 measured by the corresponding wheel speed sensor 152, an oscillation of the rotational speed of the corresponding wheel 111. Specifically, the oscillation obtainer 12 can be configured to obtain information about an oscillation of each wheel 111 indirectly from values measured by the corresponding MG resolver 151 or directly from values measured by the corresponding wheel speed sensor 152.

The evaluation unit 13 is configured to perform an evaluation of the condition of a road surface in accordance with the oscillation command and the information about the oscillation obtained by the oscillation obtainer 12. How the evaluation unit 13 evaluates the condition of the road surface will be described later.

The travel controller 14 is configured to control how the vehicle 100 travels on the road surface in accordance with the evaluation result, i.e., the evaluation, about the condition of the road surface obtained by the evaluation unit 13. For example, the travel controller 14 causes the unillustrated braking apparatus to change a usual braking method to a specific braking method that prevents each wheel 111, 112 from locking in response to evaluating that the condition of the road surface is a low-friction condition, such as a frozen condition. In this example, the travel controller 14 can perform a task of reducing the traveling speed of the vehicle 100 down to a predetermined safety speed. The travel controller 14 can be configured to select one of various available travel-control methods based on the evaluation result about the condition of the road surface obtained by the evaluation unit 13, and perform the selected travel-control method to accordingly control how the vehicle 100 travels on the road surface.

A task of controlling how the vehicle 100 travels on the road surface, which is carried out by the travel controller 14, can perform a first task of directly adjusting the traveling speed of the vehicle 100 or a second task of outputting information required to adjust the traveling speed of the vehicle 100. As an example of the second task, the travel controller 14 transmits, to, for example, the higher-level ECU 20, a parameter indicative of the condition of the road surface, such as a friction coefficient or a $\mu$-gradient of the road surface.

The evaluation apparatus 10 can be configured to perform only the task of evaluating the condition of the road surface, and the higher-level ECU 20 can be configured to perform all the remaining tasks. For example, the higher-level ECU 20 can include at least one of the functional modules 11 to 15 of the evaluating unit 10 illustrated in Fig. 2. In this example, the higher-level ECU 20 can serve as at least a part of the evaluation apparatus 10. As described above, the evaluation apparatus 10 and the higher-level ECU 20 can freely share the tasks, i.e., functions, that should be implemented by at least one of the evaluation apparatus 10 and the higher-level ECU 20. Each of the evaluation apparatus 10 and the higher-level ECU 20 can include a freely selected one of various configurations.

The transmitter 15 is configured to transmit, to the higher-level ECU 20, the evaluation result, i.e., the evaluation, about the condition of the road surface obtained by the evaluation unit 13. The transmitter 15 is also configured to transmit, to one or more external components, the evaluation result about the condition of the road surface obtained by the evaluation unit 13. The one or more external components can include at least one external server stored in one of cloud-storages.

In this example, the at least one external server can collect, from each of the many vehicles 100 traveling on respective road surfaces, the evaluation result about the condition of the corresponding one of the road surfaces. Then, the at least one server can transmit, to the higher-level ECU 20 of each of the many vehicles 100, the evaluation results about all the respective road surfaces. This enables the higher-level ECU 20 of each vehicle 100 to ascertain the conditions of the other road surfaces on which the corresponding vehicle 100 is not traveling. This therefore makes it possible to determine, in a plurality of available routes, a route along which each vehicle 10 will travel; the route does not include road surfaces that have a low-friction condition.

Next, the following describes an evaluation routine cyclically carried out by the evaluation apparatus 10. One cycle of the evaluation routine will also be referred to as a control cycle.

When starting the evaluation routine, the evaluation apparatus 10 determines whether an evaluating request is transmitted thereto from the higher-level ECU 20 in step S0 1. The evaluating request transmitted from the higher-level ECU 20 to the evaluation apparatus 10 is a signal that causes the evaluation apparatus 10 to perform evaluating of the road surface.

Upon determination that no evaluating request is transmitted thereto from the higher-level ECU 20 (NO in step S01), the evaluation apparatus 10 terminates the evaluation routine. Otherwise, upon determination that the evaluating request is transmitted to the evaluation apparatus 10 from the higher-level ECU 20 (YES in step S01), the evaluation routine proceeds to step S02.

In step S02, the oscillation unit 11 starts to output the oscillation command.

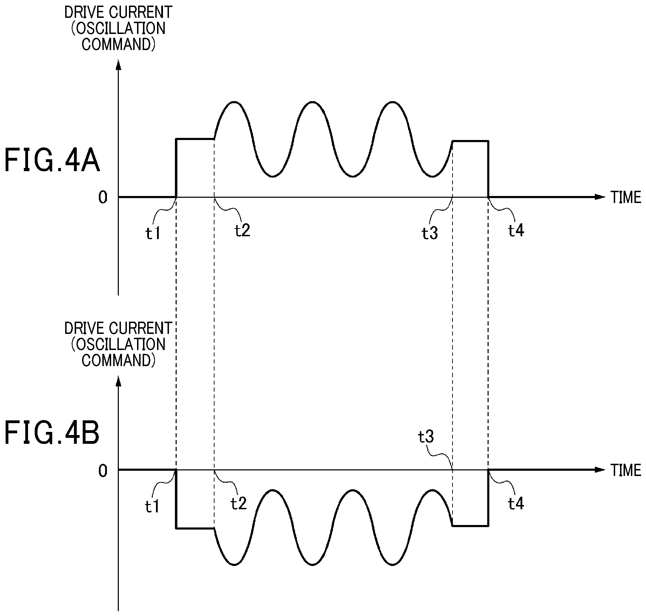

Fig. 4A illustrates an example of how the drive current to be supplied to the rotary electric machine 131 changes over time based on the outputted oscillation command. As described above, the oscillation command is outputted from the oscillation unit 11 as command values for the drive current to be supplied to the rotary electric machine 131. For this reason, the change of the drive current illustrated in Fig. 4A can be regarded as the waveform of the oscillation command.

The example illustrated in Fig. 4A shows that the oscillation command is offset positively from zero at time $t1$. This causes the rotary electric machine 131 to generate, from the time $t1$, substantially constant torque that causes the vehicle 100 to travel forward.

From time $t2$ after the time $t1$, the oscillation command outputted from the oscillation unit 11 causes the drive current to sinusoidally oscillate. The sinusoidal oscillation of the drive current has a predetermined amplitude that is set to maintain the torque generated from the rotary electric machine 131 to be higher than or equal to zero. In other words, the offset amount of the drive current, i.e., the oscillation command, is determined such that sinusoidally oscillating drive current after the time $t2$ is prevented from decreasing below zero.

The example illustrated in Fig. 4A shows that the oscillation of the drive current has continued from the time $t2$ to time $t3$. After the time $t3$ at which the oscillation of the drive current is stopped, the offset amount of the drive current, i.e., the oscillation command, is set to zero at time $t4$.

Let us assume that the oscillation command outputted from the oscillation unit 11 causes the torque generated by the rotary electric machine 131 to alternately oscillate above and below zero. In this assumption, there would be so-called "backlash" in the drive-power transfer path, i.e., torque transfer path, from the rotary electric machine 131 to each wheel 111, resulting in an unpredictable disturbance being applied to the oscillation obtained by the oscillation obtainer 12. This would reduce the accuracy of evaluating, by the evaluation unit 13, the condition of the road surface.

From this viewpoint, the oscillation unit 11 according to the first embodiment is configured to output the oscillation command that has offset positively from zero; the positively offset oscillation command causes torque generated by the rotary electric machine 131 to change to be always positive. In other words, the oscillation unit 11 is configured to output the oscillation command that prevents the occurrence of "backlash" in the drive-power transfer path, i.e., torque transfer path, from the rotary electric machine 131 to each wheel 111.

This configuration of the oscillation unit 11 enables the evaluation unit 13 to check the condition of the road surface with no influence from backlash.

Oscillation of the rotational speed of each wheel 111 within a period for which the oscillation command has been outputted from the oscillation unit 11 causes the body 101 to vibrate. For suppressing the magnitude of the vibration to a very low level to accordingly reduce any uncomfortable feeling felt by one or more occupants of the vehicle 100, the oscillation unit 11 according to the first embodiment is configured to output the oscillation command having a predetermined peak-to-peak amplitude; the predetermined peak-to-peak amplitude of the oscillation command causes a peak-to-peak amplitude of the vibration of the acceleration applied to the body 101 to 0.03 G.

The oscillation of the oscillation command outputted from the oscillation unit 11 within the range from the time t2 to the time t3 (see Fig. 4A) has a predetermined frequency that is set to be different from at least one resonant frequency of the vehicle 100. The at least one resonant frequency of the vehicle 100 show the frequency of at least one resonance that can occur at a corresponding at least one portion of the vehicle 100. Usually, there are resonance frequencies of the vehicle 100, which show the frequencies of resonances that can occur at corresponding respective portions of the vehicle 100. These resonant frequencies of the vehicle 100 can include a first resonant frequency of the drive shaft of the vehicle 100 in a torsional direction of the drive shaft, and a second resonant frequency of the body 101 in the pitch direction. The frequency of the oscillation based on the oscillation command is set to be different from any of the resonant frequencies of the vehicle 100.

Specifically, as described above, the oscillation unit 11 of the first embodiment is configured to output the oscillation command that causes the frequency of the oscillation of rotation of each wheel 111 to be different from the resonant frequencies of the vehicle 100. This configuration prevents the occurrence of resonances in the vehicle 100 due to the oscillation command to accordingly prevent one or more occupants of the vehicle 100 from having feeling discomfort.

The waveform of the signal outputted from the oscillation unit 11 as the oscillation command can be a sinusoidal waveform as described above, but can be set to a waveform different from the sinusoidal waveform. For example, the waveform of the signal outputted from the oscillation unit 11 as the oscillation command can be set to a waveform whose frequency changes over time within a predetermined range, such as a sinusoidal chirp waveform. In this example, the frequency of the oscillation command is preferably set to be different from the resonant frequencies of the vehicle 100. That is, the fluctuation range of the frequency of the oscillation command is preferably set not to overlap with any of the resonant frequencies of the vehicle 100.

Following the operation in step S02, the oscillation unit 11 starts to output the vibration control command in step S03.

Fig. 4B illustrates an example of how the drive current to be supplied to the rotary electric machine 132 changes over time based on the outputted vibration control command. As described above, the vibration control command is outputted from the oscillation unit 11 as command values for the drive current to be supplied to the rotary electric machine 132. For this reason, the change of the drive current illustrated in Fig. 4B can be regarded as the waveform of the vibration control command.

The example illustrated in Fig. 4B shows that the vibration control command is offset negatively from zero at the time *t1*. This causes the rotary electric machine 132 to generate, from the time *t1,* substantially constant torque that causes the vehicle 100 to travel rearward.

From the time t2 after the time *t1,* the vibration control command outputted from the oscillation unit 11 causes the drive current to oscillate. The waveform of the vibration control command is set to cause the torque, to which reference character F' is assigned, generated from the rotary electric machine 132 to have a value represented by the following expression (1):

$$F' = -\frac{G_1(s)}{G_2(s)}F \qquad \cdots(1)$$

In the expression (1), *F* represents the torque generated from the rotary electric machine 131, $G_1(s)$ represents a first transfer function between the torque *F* as an input to the first transfer function and torque transferred to each wheel 111 as an output from the first transfer function.

In the expression (2), $G_2(s)$ represents a second transfer function between the torque *F'* generated from the rotary electric machine 132 as an input to the second transfer function and torque transferred to each wheel 112 as an output from the second transfer function.

The expression (1) shows that the vibration control command outputted from the oscillation unit 11 is adjusted to cause

    (I) The magnitude of the torque transferred to each wheel 111 to be identical to the magnitude of the torque transferred to each wheel 112
    (II) The direction of the torque transferred to each wheel 111 to be opposite to the direction of the torque transferred to each wheel 112

For example, the oscillation unit 11 can be configured to obtain the torque *F* generated from the rotary electric machine 131, obtain the torque F' *g*enerated from the rotary electric machine 132, and adjust, based on the obtained torque *F* and torque *F',* the drive currents for the respective rotary electric machines 131 and 132 such that the obtained torque *F* and torque *F'* satisfy the expression (1).

Like the oscillation command, the offset amount of the drive current, i.e., the vibration control command, is determined such that oscillating drive current after the time *t2* is prevented from increasing above zero. After the time *t3* at which the oscillation of the drive current is stopped, the offset amount of the drive current, i.e., the vibration control command, is set to zero at the time *t4*. The oscillation unit 11 is configured to output the vibration control command that prevents the occurrence of "backlash" in the drive-power transfer path, i.e., torque transfer path, from the rotary electric machine 132 to each wheel 112.

At the completion of the operation in step S03, the rotational speed of each wheel 111 is in a state of varying based on the oscillation command, and the rotational speed of each wheel 112 is in a state of varying based on the vibration control command. Because the variations in the rotational speed of each wheel 111 and the variations in the rotational speed of each wheel 112 cancel one another out, a vibration of the body 101 is more suppressed as compared with a case where no vibration control command is outputted from the oscillation unit 11.

Following the operation in step S03, the evaluation apparatus 10 determines whether there is a relatively great vibration of the body 101 in step S04. More specifically, the evaluation apparatus 10 determines whether the peak-to-peak amplitude of a vibration of the body 101, which is measured by the acceleration sensor 153, is greater than 0.03 G in step S04.

Upon determination that there is a relatively great vibration of the body 101, i.e., the peak-to-peak amplitude of the vibration of the body 101, which is measured by the acceleration sensor 153, is greater than 0.03 G, (YES in step S04), the evaluation apparatus 10 adjusts the oscillation command to thereby cause the magnitude of the vibration of the body 101 to be smaller in step S05. As an example of this adjustment of the oscillation command, the evaluation apparatus 10 can use a lowpass filter to thereby the magnitude of the vibration of the body 101 to be smaller in step S05. In step S05, the evaluation apparatus 10 uses the expression (1) to thereby adjust the vibration control command while adjusting the oscillation command.

After the operation in step S05, the evaluation routine proceeds to step S06.

Otherwise, upon determination that there is not a relatively great vibration of the body 101, i.e., the peak-to-peak amplitude of the vibration of the body 101, which is measured by the acceleration sensor 153, is smaller than or equal to 0.03 G, (NO in step S04), the evaluation routine proceeds to step S06.

In step S06, the oscillation obtainer 12 obtains information about the oscillation of the rotational speed of each wheel 111. For example, the oscillation obtainer 12 according to the first embodiment obtains, as the waveform of the oscillation of the rotational speed of each wheel 111, the waveform indicative of how the rotational speed of the rotary electric machine 131 measured by the corresponding MG resolver 151 changes over time. The oscillation obtainer 12 stores the obtained waveform of the oscillation of the rotational speed of each wheel 111 in an unillustrated storage device installed in the evaluation apparatus 10.

Following the operation in step S06, the evaluation apparatus 10 obtains the waveform of the drive current supplied to the rotary electric machine 131 in step S07. That is, the waveform obtained in step S07 is the waveform of the drive current supplied to the rotary electric machine 131 within a period for which the rotational speed of each wheel 111 has been oscillating based on the oscillation command outputted from the oscillation unit 11. The evaluation apparatus 10 stores the obtained waveform of the oscillation of the drive current in the unillustrated storage device installed in the evaluation apparatus 10.

That is, the waveform of the drive current stored in step S07 also represents the waveform of the oscillation command outputted from the oscillation unit 11.

Subsequently from the operation in step S07, the evaluation apparatus 10 performs a task of calculating a reference waveform in step S08. The "reference waveform" represents a waveform of an oscillation that is predicted to occur in rotation of each wheel 111 based on the oscillation command outputted from the oscillation unit 11. For example, the evaluation unit 13 of the evaluation apparatus 10 calculates the reference waveform under a predetermined condition that a road-surface friction coefficient has a predetermined reference value. For example, the predetermined reference value of the road-surface friction coefficient can be set to an average value between a dry road surface and a wheel.

The task of calculating the reference waveform includes a first task of converting the waveform of the drive current obtained in step S07, i.e., the waveform of the oscillation command, into a variation of torque to be outputted from the rotary electric machine 131. The first task for example refers to a map indicative of a correlative relationship between (i) values of drive current to be supplied to the rotary electric machine 131 and (ii) respective corresponding values of torque to be outputted from the rotary electric machine 131 to accordingly convert the waveform of the drive current obtained in step S07 into the variation of torque to be outputted from the rotary electric machine 131.

The task of calculating the reference waveform additionally includes a second task of converting the converted waveform of torque of the rotary electric machine 131 into the waveform of change in the rotational speed of the rotary electric machine 131 based on a first transfer function. The first transfer function used by the second task, which has been prepared, represents a correlative relationship between (i) values of torque to be outputted from the rotary electric machine 131 and (ii) respective corresponding values of the rotational speed of the rotary electric machine 131 on the condition that the road-surface friction coefficient is set to the predetermined reference value.

That is, the evaluation apparatus 10 calculates, in step S08, the reference waveform as a result of converting the waveform of the drive current obtained in step S07, i.e., the waveform of the oscillation command, into the waveform of the rotational speed of the rotary electric machine 131 on the condition that the road-surface friction coefficient is set to the predetermined reference value.

As described later, the reference waveform calculated in step S08 is compared with the waveform obtained in step S06. For this reason, a physical quantity represented by the reference waveform, i.e., the rotational speed of the rotary electric machine 131 according to the first embodiment, is preferably identical to that obtained in step S06.

For example, let us assume that the oscillation obtainer 12 directly obtains, as the waveform of the oscillation of the rotational speed of each wheel 111, the waveform indicative of how the rotational speed of the rotary electric machine 131 measured by the corresponding MG resolver 151 changes over time. In this assumption, the evaluation apparatus 10 preferably calculates, as the reference waveform, the waveform of the rotational speed of each wheel 111 in place of the waveform of the rotational speed of the rotary electric machine 131. Specifically, in this assumption, the second task is modified to convert the converted waveform of torque of the rotary electric machine 131 into the waveform of change in the rotational speed of each wheel 111 based on a second transfer function. The second transfer function used by the modified second task, which has been prepared, represents a correlative relationship between (i) values of torque to be outputted from the rotary electric machine 131 and (ii) respective corresponding values of the rotational speed of each wheel 111 on the condition that the road-surface friction coefficient is set to the predetermined reference value.

Following the operation in step S08, the evaluation apparatus 10 performs a task of calculating both a first attenuation rate and a second attenuation rate in step S09.

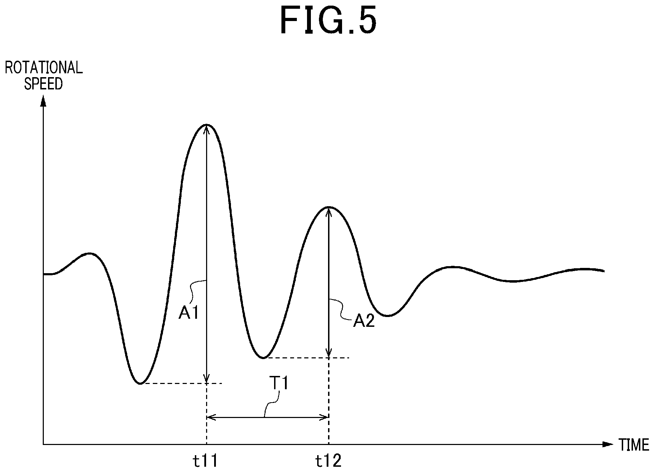

The following describes the definition of an attenuation rate. Fig. 5 illustrates an example of a waveform showing how the rotational speed of each wheel 111 changes over time. The example waveform illustrated in Fig. 5 has a first peak-to-peak amplitude of $A1$ at time $t11$ in a selected first period, and has a second peak-to-peak amplitude of $A2$ at time $t12$ in a selected second period after the selected first period.

The attenuation rate according to the first embodiment is defined as $A2/A1$ or can be defined as $(A2/A1)/T1$; $T1$ represents the length of an interval between from the time $t11$ to the time $t12$. The definition of the attenuation rate of a waveform according to the first embodiment is not limited thereto. Specifically, information indicative of the degree of attenuation of a waveform over time can be used as the attenuation rate of the waveform. It is possible to sample, from a waveform, a first peak-to-peak amplitude at any time, and thereafter sample a second peak-to-peak amplitude at any time.

The first attenuation rate calculated in step S09 is an attenuation rate that is calculated set forth above from the waveform of the oscillation of the rotational speed of each wheel 111 obtained in step S06. That is, the first attenuation rate can be defined as a first parameter indicative of the degree of attenuation in the oscillation of the rotational speed of each wheel 111. The evaluation apparatus 10 according to the first embodiment calculates, as the first attenuation rate, the attenuation rate of the waveform indicative of how the rotational speed of the rotary electric machine 131 measured by the corresponding MG resolver 151 changes over time.

The second attenuation rate calculated in step S09 is an attenuation rate that is calculated set forth above from the reference waveform calculated in step S08. That is, the second attenuation rate can be defined as a second parameter indicative of the degree of attenuation in the oscillation that is predicted to occur in the rotational speed of each wheel 111 on the condition that the road-surface friction coefficient is set to the predetermined reference value. This makes clear that, if the friction coefficient of the actual road surface on which the vehicle 100 is actually traveling becomes the predetermined reference value, the first attenuation rate and the second attenuation rate can be in agreement with each other.

Following the operation in step S09, the evaluation apparatus 10 calculates an absolute difference between the first attenuation rate and the second attenuation rate, and determines whether the absolute difference between the first attenuation rate and the second attenuation rate is greater than a friction-condition threshold in step S10.

The inventors of the present invention have demonstrated that an oscillation of the rotational speed of each wheel 111 based on the oscillation command for each target road surface is more likely to decay as the friction coefficient of the corresponding target road surface becomes smaller. For this reason, the first attenuation rate calculated in step S09 for each target road surface becomes greater as the friction coefficient of the corresponding target road surface with respect to the vehicle 100 becomes smaller, resulting in the absolute difference between the first attenuation rate and the second attenuation rate becoming greater. The friction-condition threshold is previously determined to identify whether the condition of the actual road surface on which the vehicle 100 is traveling is a high-friction condition or a low-friction condition.

Upon determination that the absolute difference between the first attenuation rate and the second attenuation rate is greater than the friction-condition threshold (YES in step S10), the evaluation unit 13 of the evaluation apparatus 10 determines that the actual road surface on which the vehicle 100 is traveling is in the low-friction condition in step S11. Then, the evaluation routine proceeds to step S13.

Otherwise, upon determination that the absolute difference between the first attenuation rate and the second attenuation rate is smaller than or equal to the friction-condition threshold (NO in step S10), the evaluation unit 13 of the evaluation apparatus 10 determines that the actual road surface on which the vehicle 100 is traveling is in the high-friction condition in step S12. Then, the evaluation routine proceeds to step S13.

As described above, the evaluation result about the condition of the actual road surface obtained by the evaluation unit 13 includes information indicative of whether the actual road surface is in the low-friction condition or the high-friction condition. Determination of whether the actual road surface is the low-friction condition or the high-friction condition is based on the oscillation command obtained in step S07 and the information about the oscillation of the rotational speed of each wheel 111 obtained in step S06.

In step S13, the evaluation apparatus 10 performs a task of calculating a slip ratio $S$ of each wheel 111 of the vehicle 100 in accordance with the following expression (2):

$$S = \frac{V_{tire} - V_{body}}{V_{body}} \qquad \cdots (2)$$

In the expression (2), $V_{tire}$ represents a relative speed of a portion of the corresponding wheel, i.e., driving wheel, 111 relative to the body 101; the portion of each wheel 111 is in contact with the actual road surface. The relative speed $V_{tire}$ of each wheel 111 can be obtained from the signal outputted from the corresponding wheel speed sensor 152. In the expression (2), $V_{body}$ represents a relative speed of the body 101 relative to the actual road surface, i.e., the speed of the vehicle 100. A value of the relative speed $V_{body}$ in a current control cycle (n) of the evaluation routine which will be referred to as a $V_{body}(n)$, can be calculated in accordance with the following expression (3):

$$V_{body}(n) = mid\left(V_A, V_{body}(n-1) + G_x dt, V_{body}(n-1) - G_x dt\right) \qquad \cdots (3)$$

where:

mid(A, B, C) represents a function of passing a selected one of A, B, C, the selected one of A, B, C being the middle in magnitude of A, B, C;
$V_A$ represents an average of the respective relative speeds $V_{tire}$ of all the wheels 111 and 112;
$V_{body}(n$ - 1) represents a value of the relative speed $V_{body}$ calculated in the expression (3) in an immediately previous control cycle (n-1) of the evaluation routine;
$G_x$ represents the value of acceleration in the roll (front-rear) axis of the vehicle 100 measured by the acceleration sensor 153; and
dt represents the length of each control cycle of the evaluation routine.

The relative speed of the body 101 $V_{body}$ for each control cycle of the evaluation routine can be calculated from the signal outputted from at least one wheel speed sensor 152 provided for at least one wheel in the wheels 111 and 112; the at least one wheel is controlled to be a driven wheel.

Following the operation in step S13, the evaluation apparatus 10 performs a task of calculating the friction coefficient of the actual road surface, which will be referred to as a friction coefficient $\mu$, between the actual road surface and each wheel 111 in accordance with the following expression (4) in step S14:

$$\mu = \frac{(FG_1(s) - Ia)/R}{F_z} \qquad \cdots (4)$$

In the expression (4), $F$ is identical to $F$ on the right side of the expression (1), and $G_1(s)$ is identical to $G_1(s)$ on the right side of the expression (1). Converting a value of the drive current obtained in step S07 into a value of torque outputted from the rotary electric machine 131 enables a value of the torque $F$ generated from the rotary electric machine 131 to be calculated.

In the expression (4), $I$ represents the moment of inertia about the corresponding wheel 111 that is an oscillation target of the oscillation command outputted from the oscillation unit 11. As a value of the moment of inertia $I$ about the corresponding wheel 111, a value obtained by converting the total mass of the body 101 into a value of the moment of inertia $I$ about the corresponding wheel 111 can be used.

In the expression (4), $a$ represents a rotational acceleration of the corresponding wheel 111, which can be calculated by differentiating the rotational speed of the corresponding wheel 111 with respect to time. In the expression (4), *R* represents the radius of the corresponding wheel 111.

In the expression (4), $F_z$ represents a normal force sustained by the corresponding wheel 111 from the actual road surface. For example, using a known method enables the normal force $F_z$ sustained by each wheel 111 from the actual road surface to calculated in accordance with predetermined parameters including, for example, (i) the height of the center of gravity of the vehicle 100, (ii) the values of acceleration applied to the body 101 measured by the acceleration sensor 152, and (iii) the wheel base of the vehicle 100. A value, which is calculated by dividing the total mass of the vehicle 100 by the total number of wheels 111 and 112, i.e., 4 according to the first embodiment, can be used as a simplified value of the normal force $F_z$.

Following the operation in step S14, the evaluation apparatus 10 performs a task of calculating a μ-gradient of the actual road surface for each wheel 111 in step S15. The μ-gradient of the actual road surface for each wheel 111 is defined as the gradient of change in the friction coefficient μ of the actual road surface with respect to change in the slip ratio S of the corresponding wheel 111 of the vehicle 100. The μ-gradient of the actual road surface for each wheel 111 can be used as a parameter needed to calculate the range of lateral force that can be generated between the corresponding wheel 111 and the actual road surface. The calculated range of the lateral force for each wheel 111 can be used to calculate an assist force for the steering of the vehicle 100.

The evaluation apparatus 10 can calculate the μ-gradient of the actual road surface for each wheel 111 as a function of (i) the slip ratio S of the corresponding wheel 111 calculated in step S13 and (ii) the friction coefficient μ calculated in step S14.

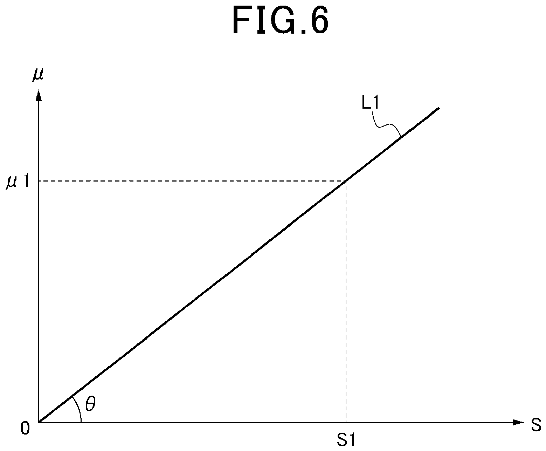

Let us assume that a value of the slip ratio *S* of each wheel 111 is a value *S1*, and a value of the friction coefficient μ is a value *μ1.* In this assumption, the evaluation apparatus 10 can perform a method of calculating a gradient *θ* of a straight line *L1* that connects between the origin 0 of a graph illustrated in Fig. 6 and a coordinate point (S1, *μ1*) in the graph as the μ-gradient of the actual road surface for the corresponding wheel 111.

The above calculation method is an example of calculation methods. As another example, the evaluation apparatus 10 can be configured to

(I) Repeat a sequence of calculation of the slip ratio S for each wheel 111 in step S13 and calculation of the friction coefficient μ for the corresponding wheel 111 in step S14 to accordingly calculate coordinate points (S, μ) for the respective repeated sequences

(II) Calculate the μ-gradient of the actual road surface for the corresponding wheel 111 in accordance with a distribution of the calculated coordinate points (S, μ)

As described above, the evaluation result about the condition of the actual road surface obtained by the evaluation unit 13 includes information indicative of the μ-gradient of the actual road surface for each wheel 11, which represents the gradient of change in the friction coefficient μ of the actual road surface with respect to change in the slip ratio S of the corresponding wheel 111.

Following the operation in step S15, the transmitter 15 of the evaluation apparatus 10 performs an output of the evaluation result about the condition of the actual road surface obtained by the evaluation unit 13 in step S16.

Specifically, the transmitter 15 transmits, to each of the higher-level ECU 20 and at least one external server, the evaluation result about the condition of the actual road surface obtained by the evaluation unit 13 that include (i) the information indicative of whether the actual road surface is the low-friction condition or the high-friction condition, and (ii) the μ-gradient of the actual road surface for each wheel 111 calculated in step S15. The evaluation result about the condition of the actual road surface to be transmitted by the transmitter 15 can include other items of information, such as the friction coefficient μ between the actual road surface and each wheel 111 calculated in step S14.

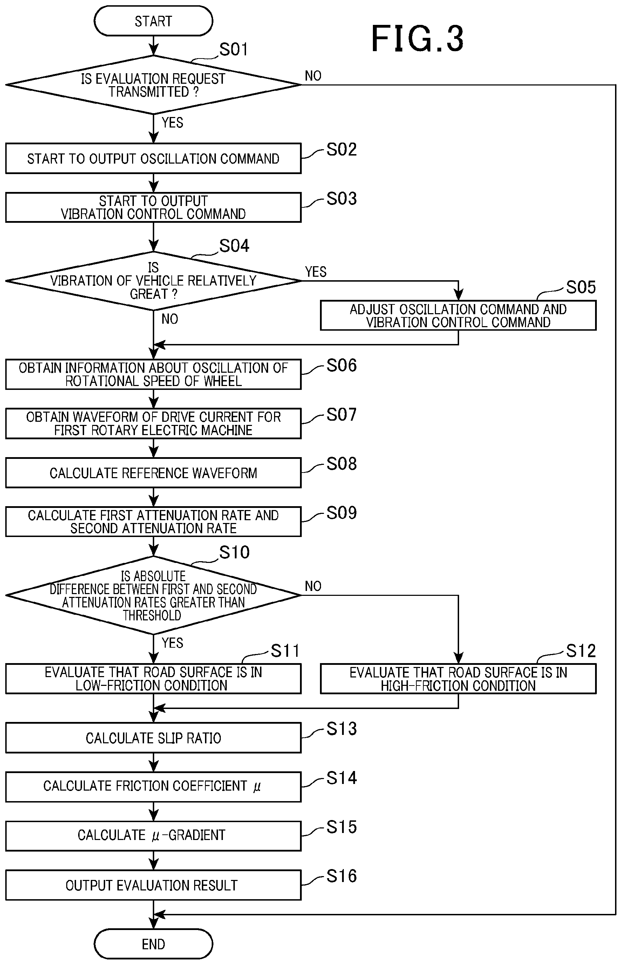

When completing the operation in step S16, the evaluation routine illustrated in Fig. 3 is terminated. Thereafter, the travel controller 14 controls how the vehicle 100 travels on the actual road surface in accordance with the evaluation result about the condition of the actual road surface outputted in step S16.

As described above, the oscillation unit 11 of the evaluation apparatus 10 according to the first embodiment is configured to output the oscillation command that actively causes the rotational speed of each wheel 111 to oscillate. In particular, one or more frequencies of the oscillation of the rotational speed of each wheel 111 based on the oscillation command are different from frequencies of natural oscillations that naturally occur in the rotational speed of each wheel 111.

This configuration therefore makes it possible to obtain the evaluation result about the road surface with higher accuracy as compared with a method of analyzing a resonant oscillation that occurs naturally.

Additionally, the travel controller 14 of the evaluation apparatus 10 is configured to control how the vehicle 100 travels in accordance with the higher-accuracy evaluation result about the condition of the road surface, making it possible to cause the vehicle 100 to travel with more stably.

The oscillation unit 11 of the evaluation apparatus 10 is configured to output the oscillation command that causes one or more frequencies of the oscillation of the rotational speed of each wheel 111 to be different from at least one resonant frequency of the vehicle 100. This configuration therefore makes it possible to evaluate the condition of the actual road surface while preventing one or more occupants of the vehicle 100 from having feeling discomfort.

The oscillation unit 11 is additionally configured to output the oscillation command for controlling the operation of the rotary electric machine 131, and output the vibration control command that control the operation of the rotary electric machine 132 to accordingly suppress a vibration of the vehicle 100.

This configuration therefore makes it possible to suppress the vibration of the vehicle 100 more strongly as compared with a case where the oscillation unit 11 outputs only the oscillation command.

The first embodiment is configured to output the oscillation command that causes the rotational speed of each front wheel 111 to oscillate, and output the vibration control command that causes the rotational speed of each rear wheel 112 to oscillate.

In place of the above configuration, the first embodiment can be modified to output the oscillation command that causes the rotational speed of each rear wheel 112 to oscillate, and output the vibration control command that causes the rotational speed of each front wheel 111 to oscillate. That is, the rotary electric machine 132 can serve as the first rotary electric machine, and the rotary electric machine 131 can serve as the second rotary electric machine.

The evaluation unit 13 of the evaluation apparatus 10 is configured to calculate the reference waveform that represents a waveform of an oscillation that is predicted to occur in the rotational speed of each wheel 111 based on the oscillation command. The evaluation unit 13 is thereafter configured to compare the first attenuation rate of the waveform of the oscillation obtained by the oscillation obtainer 12 with the second attenuation rate of the reference waveform to accordingly determine whether the condition of the actual road surface is the low-friction condition or the high-friction condition.

This configuration performs determination of whether the actual road surface is the low-friction condition or the high-friction condition in accordance with both the first attenuation rate of the oscillation based on the oscillation command and the second attenuation rate of the reference waveform, making it possible to accurately perform determination of whether the actual road surface is the low-friction condition.

Second embodiment

Next, the following describes the second embodiment. The second embodiment is slightly different from the first embodiment in the following points. The following therefore mainly describes the different points of the second embodiment from the first embodiment while appropriately omitting descriptions of the remaining of the second embodiment, which is identical to that of the first embodiment.

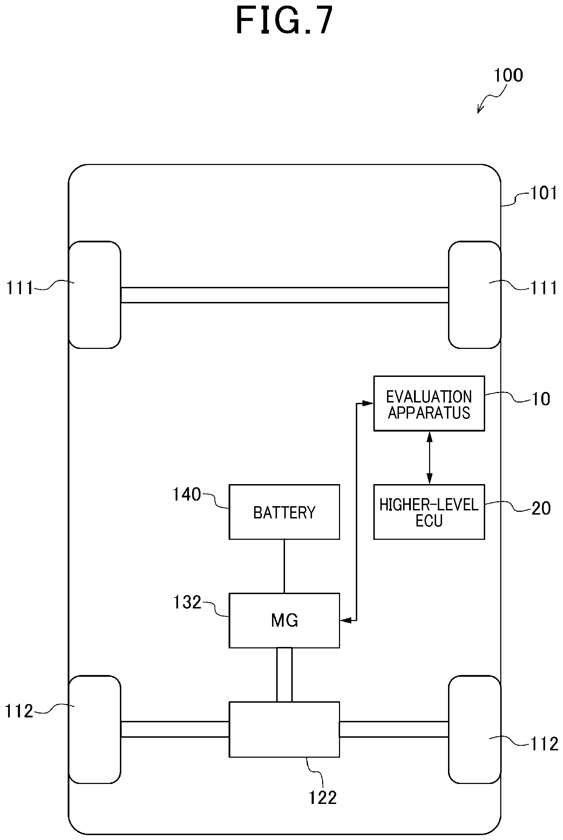

Referring to Fig. 7, the vehicle 100 according to the second embodiment does not include the first rotary electric machine 131, so that the pair of wheels 111 serve as a pair of driven wheels, and therefore the pair of wheels 112 serve as a pair of driving wheels.

The oscillation unit 11 according to the second embodiment is configured to output the oscillation command, which causes the rotational speed of each wheel 112 to oscillate without outputting the vibration control command. That is, the rotary electric machine 132 according to the second embodiment serves as the first rotary electric machine, and no second rotary electric machines are provided in the second embodiment.

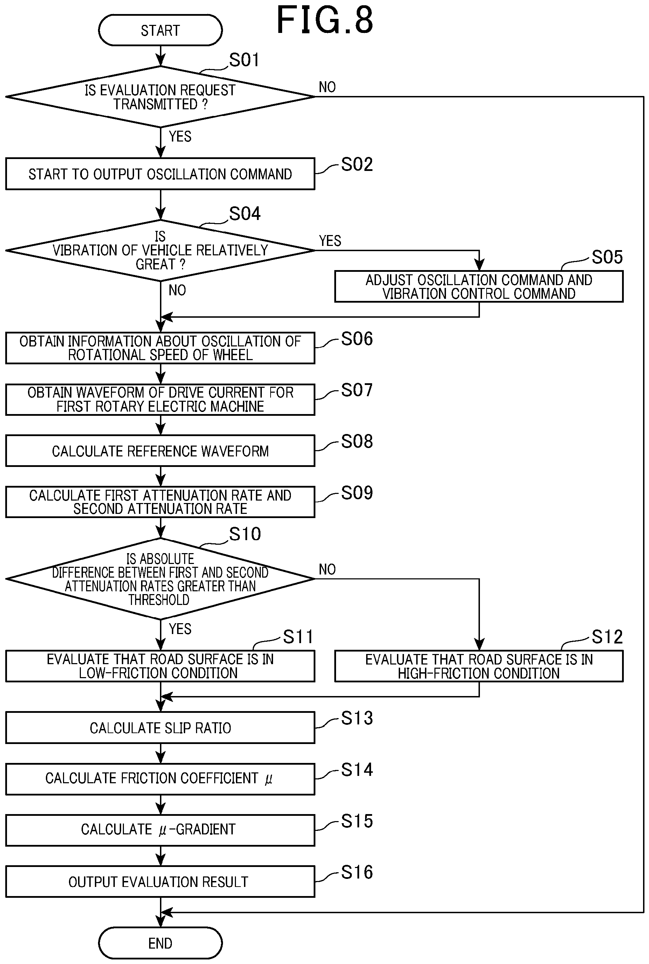

Next, the following describes an evaluation routine illustrated in Fig. 8, which is cyclically carried out by the evaluation apparatus 10 according the second embodiment in place of the evaluation routine illustrated in Fig. 3. The following therefore describes operations in the evaluation routine illustrated in Fig. 8, which are different from the operations in the evaluation routine illustrated in Fig. 3.

In step S02, the oscillation unit 11 starts to output the oscillation command.

The oscillation command according to the second embodiment is outputted from the oscillation unit 11 to the inverter connected to the rotary electric machine 132 as command values for the drive current to be supplied to the rotary electric machine 132.

After the operation in step S02, the evaluation routine proceeds to step S04 without passing through the operation in step S03.

In step S05, the evaluation apparatus 10 adjusts only the oscillation command without adjusting the vibration control command.

The operations carried out subsequently from the operation in step S05 are identical to the operations in the evaluation routine according to the first embodiment as long as the "wheel 111" should be read as "vehicle 112" and the "rotary electric machine 131 should be read as "rotary electric machine 132".

As described above, the evaluation apparatus 10 according to the second embodiment is capable of performing the evaluation routine for the two-wheel drive vehicle 100, which is not a four-wheel drive vehicle, like the evaluation apparatus 10 according to the first embodiment except for the output of the vibration control command. The two-wheel drive vehicle 100 is not limited to a front-wheel drive vehicle according to the second embodiment, and can be configured as a rear-wheel drive vehicle.

Third embodiment

Next, the following describes the third embodiment. The third embodiment is slightly different from the first embodiment in the following points. The following therefore mainly describes the different points of the third embodiment from the first embodiment while appropriately omitting descriptions of the remaining of the second embodiment, which is identical to that of the first embodiment.

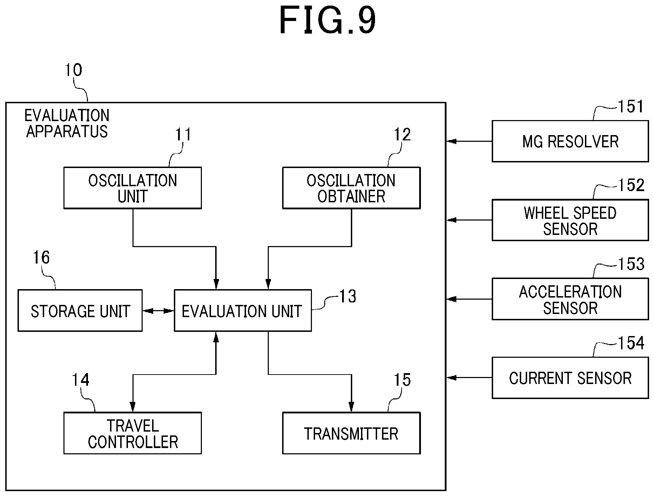

Referring to Fig. 9, the evaluation apparatus 10 according to the third embodiment includes a storage unit 16 as a functional module. For example, the storage unit 16 is comprised of a nonvolatile storage device, such as a hard disc or an SSD.

In the storage unit 16, a three-dimensional map of a 3-way correlative relationship is previously stored; the correlative relationship represents a predetermined correlative relationship among

(I) First information about oscillation commands to be outputted from the oscillation unit 11
(II) Second information about oscillations of the rotational speed of each wheel 111, which is an oscillation target of the oscillation commands, based on the respective oscillation commands
(III) Corresponding information items about a road-surface condition

Each of the oscillation commands to be outputted from the oscillation unit 11 represents, for example, the waveform of the drive current outputted as the corresponding one of the oscillation commands.

Each of the oscillations of the rotational speed of each wheel 111, which is the oscillation target of the oscillation command, based on the corresponding one of the oscillation commands represents, for example, the waveform of change of the rotational speed of the corresponding wheel 111.

Each of the information items about the road-surface condition represents, for example, one of the low-friction condition and the high-friction condition.

That is, the correlative information stored in the storage unit 16 represents a correlative-relationship for each road surface between

(1) Each combination of a corresponding one of the oscillation commands and a corresponding one of the oscillations of the rotational speed of each wheel 111
(2) A corresponding information item, i.e., a corresponding evaluation result, about the road-surface condition

The correlative relationship has been created based on machine learning with one or more neural networks, and is stored in the storage unit 16. The correlative-relationship stored in the storage device 16 can be updated based on additional machine learning while the vehicle 100 is traveling. That is, the correlative relationship, which was loaded into the storage device 16 during, for example, manufacturing of the vehicle 100, can be used without being updated or can be updated based on machine learning after being loaded into the storage device 16.

As the machine learning, the third embodiment can use one or more machine learning algorithms that include a Bayesian Network algorithm, a support-vector machine algorithm, a Gaussian Mixture Model algorithm, a decision tree algorithm, and a random forest algorithm. Additionally, as the machine learning, a supervised learning algorithm, an unsupervised learning algorithm, or a reinforcement learning algorithm can be used. At least two algorithms selected from these learning algorithms can be used as the machine learning. At least one machine learning algorithm, which is used as the machine learning, can be rewritten based on updating of the software corresponding to the at least one machine learning algorithm.

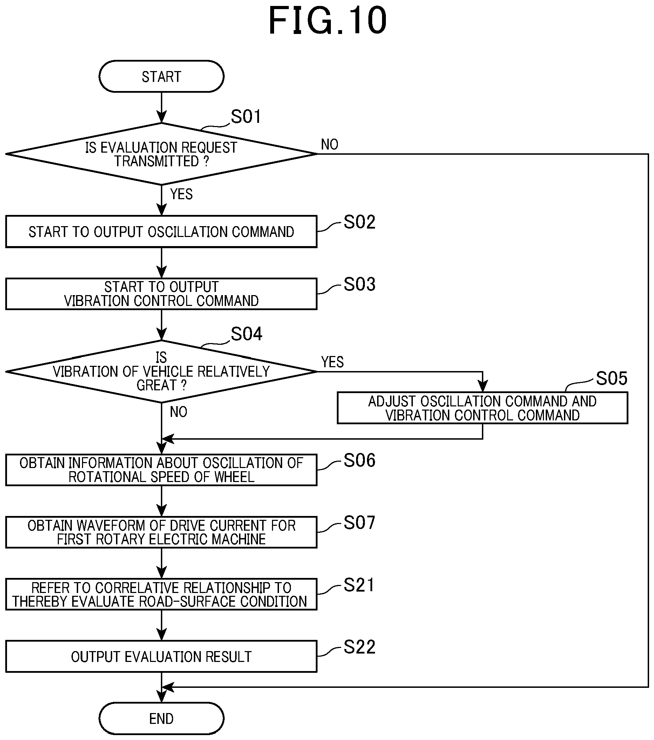

Next, the following describes an evaluation routine illustrated in Fig. 10, which is cyclically carried out by the evaluation apparatus 10 according the third embodiment in place of the evaluation routine illustrated in Fig. 3.

The operations from step S01 to step S07 in Fig. 10 are respectively identical to the operations from step S01 to step S07 in Fig. 3.

After the operation in step S03, the evaluation routine proceeds to step S21.

In step S21, the evaluation unit 13 refers to the correlative relationship stored in the storage unit 16 using a combination of the oscillation obtained in step S06 and the waveform of the drive current obtained in step S07 to thereby retrieve, from the correlative relationship stored in the storage unit 16, a corresponding evaluation result of the road-surface condition.

The oscillation obtained in step S06, i.e., the oscillation in the rotational speed of each wheel 111, corresponds to the second information stored in the storage unit 16, and the waveform of the drive current obtained in step S07 corresponds to the first information stored in the storage unit 16.

That is, the evaluation unit 13 refers to the correlative relationship stored in the storage unit 16 using a combination of the oscillation obtained in step S06 and the waveform of the drive current obtained in step S07 to accordingly retrieve, from the correlative relationship stored in the storage unit 16, one of the information items, i.e., one of the evaluation results about the road-surface condition, which correlates with the combination of the oscillation obtained in step S06 and the waveform of the drive current obtained in step S07.

A dimension and/or scale of the first information included in the correlative relationship can preferably match with those of the information obtained in step S07, and similarly a dimension and/or scale of the second information included in the correlative relationship can preferably match with those of the information obtained in step S06.

As described above, the evaluation apparatus 10 according to the third embodiment includes the storage unit 16 in which the correlative relationship is stored; the correlative relationship is correlative relationship information among

(I) Oscillation commands to be outputted from the oscillation unit 11
(II) Oscillations of the rotational speed of each wheel 111, which is an oscillation target of the oscillation commands, based on the respective oscillation commands
(III) Corresponding information items about a road-surface condition

The evaluation unit 13 therefore refers to the correlative relationship to thereby evaluate the condition of the actual road surface on which the vehicle 100 is traveling.

The above configuration of the evaluation apparatus 10 makes it possible to utilize machine learning based on enormous volumes of trained data items to accordingly ascertain the condition of the actual road surface more accurately.

Following the operation in step S21, the transmitter 15 of the evaluation apparatus 10 performs an output of the evaluation result about the condition of the actual road surface obtained by the evaluation unit 13 in step S22, which is identical to the operation in step S16 in Fig. 3.

The above methods and apparatuses described in the present invention can be implemented by a dedicated computer including a memory and a processor programmed to perform one or more functions embodied by one or more computer programs.

The above methods and apparatuses described in the present invention can also be implemented by a dedicated computer including a processor comprised of one or more dedicated hardware logic circuits.

The above methods and apparatuses described in the present invention can further be implemented by at least one dedicated computer comprised of a memory, a processor programmed to perform one or more functions embodied by one or more computer programs, and one or more hardware logic circuits.

The computer programs described in the present invention can be stored in a computer-readable non-transitory storage medium as instructions executable by a computer and/or a processor.

The one or more hardware logic circuits can be implemented by one or more digital circuits including plural logic gates and/or one or more analog circuits.

## Claims

1. An evaluation apparatus (10) for evaluating a condition of a road surface on which a vehicle (100) having at least one wheel (111) is traveling, the evaluation apparatus comprising:

   an oscillation unit (11) configured to output an oscillation command that causes the at least one wheel of the vehicle to oscillate;
   an oscillation obtainer (12) configured to obtain an oscillation of rotation of the at least one wheel in response to the output of the oscillation command; and
   an evaluation unit (13) configured to perform an evaluation of the condition of the road surface in accordance with the oscillation command and the oscillation obtained by the oscillation obtainer,
   wherein the evaluation of the condition of the road surface performed by the evaluation unit (13) includes whether the condition of the road surface is a low-friction condition or a high-friction condition,
   **characterized in that** the evaluation unit (13) is configured to:

   calculate a reference waveform that represents a waveform of a predicted oscillation that is predicted to occur in rotation of the at least one wheel (111) based on the oscillation command;
   calculate a first attenuation rate of a waveform of the oscillation obtained by the oscillation obtainer (12), and a second attenuation rate of the reference waveform; and
   compare the first attenuation rate with the second attenuation rate to accordingly determine whether the condition of the road surface is the low-friction condition or the high-friction condition.

2. The evaluation apparatus according to claim 1, wherein:

the vehicle includes at least one rotary electric machine (131, 132); and

the oscillation unit (11) is configured to output the oscillation command as a signal for controlling an operation of the at least one rotary electric machine.

3. The evaluation apparatus according to claim 1 or 2, wherein:
the oscillation unit (11) is configured to output the oscillation command that causes at least one frequency of the oscillation of rotation of the at least one wheel (111) to be different from at least one resonant frequency of the vehicle.

4. The evaluation apparatus according to any one of claims 1 to 3, wherein:
the oscillation unit (11) is configured to output the oscillation command that prevents an occurrence of backlash in a drive-power transfer path to the at least one wheel.

5. The evaluation apparatus according to any one of claims 1 to 4, wherein:

the at least one wheel (111) comprises at least one first wheel and at least one second wheel; the vehicle includes a first rotary electric machine and a second rotary electric machine;
the first rotary electric machine is configured to generate drive power for rotating the at least one first wheel;
the second rotary electric machine is configured to generate drive power for rotating the at least one second wheel; and
the oscillation unit (11) is configured to:

output the oscillation command as a signal for controlling an operation of the first rotary electric machine; and
output a vibration control command as a signal for controlling an operation of the second rotary electric machine to thereby suppress a vibration of the vehicle.

6. The evaluation apparatus according to any one of claims 1 to 5, wherein:

the vehicle includes at least one rotary electric machine; and
the oscillation obtainer (12) is configured to obtain the oscillation of rotation of the at least one wheel based on change of a rotational speed of the rotary electric machine.

7. The evaluation apparatus according to any one of claims 1 to 6, further comprising:
a storage unit (16) configured to store a correlative relationship among the oscillation command, the oscillation of rotation of the at least one wheel, and information indicative of the condition of the road surface, wherein:
the evaluation unit (13) is configured to refer to the correlative relationship to thereby perform the evaluation of the condition of the road surface.

8. The evaluation apparatus according to any one of claims 1 to 7, further comprising:
a travel controller (14) configured to control how the vehicle travels on the road surface in accordance with the evaluation of the road surface performed by the evaluation unit.

9. The evaluation apparatus according to any one of claims 1 to 8, further comprising:
a transmitter (15) configured to transmit the evaluation of the road surface performed by the evaluation unit to an external component.

**Patentansprüche**

1. Evaluierungsvorrichtung (10) zum Evaluieren eines Zustands einer Straßenoberfläche, auf der ein Fahrzeug (100) mit mindestens einem Rad (111) fährt, wobei die Evaluierungsvorrichtung aufweist:

eine Oszillationseinheit (11), die konfiguriert ist, um einen Oszillationsbefehl auszugeben, der das mindestens eine Rad des Fahrzeugs zum Oszillieren veranlasst;
eine Oszillationsbezugseinrichtung (12), die konfiguriert ist, um eine Oszillation einer Rotation des mindestens einen Rades als Reaktion auf die Ausgabe des Oszillationsbefehls zu beziehen; und
eine Evaluierungseinheit (13), die konfiguriert ist, um eine Evaluierung des Zustands der Straßenoberfläche gemäß dem Oszillationsbefehl und der durch die Oszillationsbezugseinrichtung bezogenen Oszillation durchzuführen,

wobei die Evaluierung des Zustands der Straßenoberfläche, die durch die Evaluierungseinheit (13) durchgeführt wird, umfasst, ob der Zustand der Straßenoberfläche ein Zustand mit geringer Reibung oder ein Zustand mit hoher Reibung ist,

**dadurch gekennzeichnet, dass** die Evaluierungseinheit (13) konfiguriert ist, um:

eine Referenzwellenform zu berechnen, die eine Wellenform einer vorhergesagten Oszillation repräsentiert, die bei einer Rotation des mindestens einen Rads (111) basierend auf dem Oszillationsbefehl vorhergesagt wird;

eine erste Dämpfungsrate einer Wellenform der Oszillation, die durch die Oszillationsbezugseinrichtung (12) bezogen wird, und eine zweite Dämpfungsrate der Referenzwellenform zu berechnen; und

die erste Dämpfungsrate mit der zweiten Dämpfungsrate zu vergleichen, um entsprechend zu bestimmen, ob der Zustand der Straßenoberfläche der Zustand mit geringer Reibung oder der Zustand mit hoher Reibung ist.

2. Evaluierungsvorrichtung gemäß Anspruch 1, wobei:

das Fahrzeug mindestens eine rotierende elektrische Maschine (131, 132) umfasst; und
die Oszillationseinheit (11) konfiguriert ist, um den Oszillationsbefehl als ein Signal zum Steuern einer Operation der mindestens einen rotierenden elektrischen Maschine auszugeben.

3. Evaluierungsvorrichtung gemäß Anspruch 1 oder 2, wobei:
die Oszillationseinheit (11) konfiguriert ist, um den Oszillationsbefehl auszugeben, der bewirkt, dass mindestens eine Frequenz der Oszillation einer Rotation des mindestens einen Rades (111) von mindestens einer Resonanzfrequenz des Fahrzeugs verschieden ist.

4. Evaluierungsvorrichtung gemäß einem der Ansprüche 1 bis 3, wobei:
die Oszillationseinheit (11) konfiguriert ist, um den Oszillationsbefehl auszugeben, der ein Auftreten von Spiel in einem Pfad zur Übertragung von Antriebsenergie zu dem mindestens einen Rad verhindert.

5. Evaluierungsvorrichtung gemäß einem der Ansprüche 1 bis 4, wobei:

das mindestens eine Rad (111) mindestens ein erstes Rad und mindestens ein zweites Rad aufweist;
das Fahrzeug eine erste rotierende elektrische Maschine und eine zweite rotierende elektrische Maschine umfasst;
die erste rotierende elektrische Maschine konfiguriert ist, um Antriebsenergie zum Drehen des mindestens einen ersten Rades zu erzeugen;
die zweite rotierende elektrische Maschine konfiguriert ist, um Antriebsenergie zum Drehen des mindestens einen zweiten Rades zu erzeugen; und
die Oszillationseinheit (11) konfiguriert ist, um:

den Oszillationsbefehl als ein Signal zum Steuern einer Operation der ersten rotierenden elektrischen Maschine auszugeben; und
einen Vibrationssteuerungsbefehl als ein Signal zum Steuern einer Operation der zweiten rotierenden elektrischen Maschine auszugeben, um dadurch eine Vibration des Fahrzeugs zu unterdrücken.

6. Evaluierungsvorrichtung gemäß einem der Ansprüche 1 bis 5, wobei:

das Fahrzeug mindestens eine rotierende elektrische Maschine umfasst; und
die Oszillationsbezugseinrichtung (12) konfiguriert ist, um die Oszillation einer Rotation des mindestens einen Rads basierend auf einer Änderung einer Rotationsgeschwindigkeit der rotierenden elektrischen Maschine zu beziehen.

7. Evaluierungsvorrichtung gemäß einem der Ansprüche 1 bis 6, weiterhin mit:
einer Speichereinheit (16), die konfiguriert ist, um eine korrelative Beziehung zwischen dem Oszillationsbefehl, der Oszillation einer Rotation des mindestens einen Rades, und Informationen, die den Zustand der Straßenoberfläche angeben, zu speichern, wobei:
die Evaluierungseinheit (13) konfiguriert ist, um auf die korrelative Beziehung Bezug zu nehmen, um dadurch die Evaluierung des Zustands der Straßenoberfläche durchzuführen.

# EP 4 155 714 B1

8. Evaluierungsvorrichtung gemäß einem der Ansprüche 1 bis 7, weiterhin mit:
einer Fahrsteuerung (14), die konfiguriert ist, um zu steuern, wie das Fahrzeug auf der Straßenoberfläche fährt, gemäß der durch die Evaluierungseinheit durchgeführten Evaluierung der Straßenoberfläche.

9. Evaluierungsvorrichtung gemäß einem der Ansprüche 1 bis 8, weiterhin mit:
einen Sender (15), der konfiguriert ist, um die von der Evaluierungseinheit durchgeführte Evaluierung der Straßenoberfläche an eine externe Komponente zu senden.

**Revendications**

1. Appareil d'évaluation (10) permettant d'évaluer un état d'une surface de la chaussée sur laquelle circule un véhicule (100) ayant au moins une roue (111), l'appareil d'évaluation comprenant :

   une unité d'obtention d'oscillations (11) configurée pour émettre une commande d'oscillation qui fait osciller l'au moins une roue du véhicule ;
   un obteneur d'oscillation (12) configuré pour obtenir une oscillation de rotation de l'au moins une roue en réponse à la sortie de la commande d'oscillation ; et
   une unité d'évaluation (13) configurée pour effectuer une évaluation de l'état de la surface de la chaussée en fonction de la commande d'oscillation et de l'oscillation obtenue par l'obteneur d'oscillation,
   dans lequel l'évaluation de l'état de la surface de la chaussée effectuée par l'unité d'évaluation (13) comporte si l'état de la surface de la chaussée est un état de faible friction ou un état de haute friction,
   **caractérisé en ce que** l'unité d'évaluation (13) est configurée pour :

      calculer une forme d'onde de référence qui représente une forme d'onde d'une oscillation prédite qui est prédite pour se produire dans la rotation de l'au moins une roue (111) sur la base de la commande d'oscillation ;
      calculer un premier taux d'atténuation d'une forme d'onde de l'oscillation obtenue par l'obteneur d'oscillation (12), et un second taux d'atténuation de la forme d'onde de référence ; et
      comparer le premier taux d'atténuation au second taux d'atténuation pour déterminer en conséquence si l'état de la surface de la chaussée est l'état de faible friction ou l'état de haute friction.

2. Appareil d'évaluation selon la revendication 1, dans lequel :

   le véhicule comporte au moins une machine électrique rotative (131, 132) ; et
   l'unité d'oscillation (11) est configurée pour émettre la commande d'oscillation en tant que signal pour contrôler un fonctionnement de l'au moins une machine électrique rotative.

3. Appareil d'évaluation selon la revendication 1 ou 2, dans lequel :
   l'unité d'oscillation (11) est configurée pour émettre la commande d'oscillation qui fait qu'au moins une fréquence de l'oscillation de rotation de l'au moins une roue (111) est différente d'au moins une fréquence de résonance du véhicule.

4. Appareil d'évaluation selon l'une des revendications 1 à 3, dans lequel
   l'unité d'oscillation (11) est configurée pour émettre la commande d'oscillation qui empêche une apparition de contre-réaction dans un chemin de transfert de puissance d'entraînement vers l'au moins une roue.

5. Appareil d'évaluation selon l'une des revendications 1 à 4, dans lequel

   l'au moins une roue (111) comprend au moins une première roue et au moins une deuxième roue ;
   le véhicule comporte une première machine électrique rotative et une deuxième machine électrique rotative ;
   la première machine électrique rotative est configurée pour générer une puissance d'entraînement pour faire tourner l'au moins une première roue ;
   la deuxième machine électrique rotative est configurée pour générer de la puissance d'entraînement pour faire tourner l'au moins une deuxième roue ; et
   l'unité d'oscillation (11) est configurée pour :

      émettre la commande d'oscillation en tant que signal pour contrôler un fonctionnement de la première

18

machine électrique rotative ; et
émettre une commande de contrôle des vibrations en tant que signal pour contrôler un fonctionnement de la deuxième machine électrique rotative afin de supprimer une vibration du véhicule.

6. Appareil d'évaluation selon l'une des revendications 1 à 5, dans lequel

le véhicule comporte au moins une machine électrique rotative ; et
l'obteneur de l'oscillation (12) est configuré pour obtenir l'oscillation de la rotation de l'au moins une roue sur la base du changement d'une vitesse de rotation de la machine électrique rotative.

7. Appareil d'évaluation selon l'une des revendications 1 à 6, comprenant en outre :
une unité de stockage (16) configurée pour stocker une relation corrélative entre la commande d'oscillation, l'oscillation de rotation de l'au moins une roue, et des informations indicatives de l'état de la surface de la chaussée, dans lequel :
l'unité d'évaluation (13) est configurée pour se référer à la relation corrélative afin d'effectuer ainsi l'évaluation de l'état de la surface de la chaussée.

8. Appareil d'évaluation selon l'une des revendications 1 à 7, comprenant en outre :
un contrôleur de déplacement (14) configuré pour contrôler la façon dont le véhicule se déplace sur la surface de la chaussée en fonction de l'évaluation de la surface de la chaussée effectuée par l'unité d'évaluation.

9. Appareil d'évaluation selon l'une des revendications 1 à 8, comprenant en outre :
un émetteur (15) configuré pour transmettre l'évaluation de la surface de la chaussée effectuée par l'unité d'évaluation à un composant externe.

# FIG.1

# FIG.2

# FIG.3

START

S01

IS EVALUATION REQUEST TRANSMITTED ? — NO

YES

START TO OUTPUT OSCILLATION COMMAND — S02

START TO OUTPUT VIBRATION CONTROL COMMAND — S03

S04

IS VIBRATION OF VEHICLE RELATIVELY GREAT ? — YES

NO

ADJUST OSCILLATION COMMAND AND VIBRATION CONTROL COMMAND — S05

OBTAIN INFORMATION ABOUT OSCILLATION OF ROTATIONAL SPEED OF WHEEL — S06

OBTAIN WAVEFORM OF DRIVE CURRENT FOR FIRST ROTARY ELECTRIC MACHINE — S07

CALCULATE REFERENCE WAVEFORM — S08

CALCULATE FIRST ATTENUATION RATE AND SECOND ATTENUATION RATE — S09

S10

IS ABSOLUTE DIFFERENCE BETWEEN FIRST AND SECOND ATTENUATION RATES GREATER THAN THRESHOLD — NO

YES

EVALUATE THAT ROAD SURFACE IS IN LOW-FRICTION CONDITION — S11

EVALUATE THAT ROAD SURFACE IS IN HIGH-FRICTION CONDITION — S12

CALCULATE SLIP RATIO — S13

CALCULATE FRICTION COEFFICIENT $\mu$ — S14

CALCULATE $\mu$-GRADIENT — S15

OUTPUT EVALUATION RESULT — S16

END

FIG.4A

DRIVE CURRENT
(OSCILLATION
COMMAND)

0

TIME

t1    t2         t3    t4

FIG.4B

DRIVE CURRENT
(OSCILLATION
COMMAND)

0

TIME

t3

t1    t2         t4

# FIG.5

# FIG.6

# FIG.7

# FIG.8

```
        ( START )
            │
            ▼  S01
    ┌──────────────────┐
    < IS EVALUATION REQUEST >──── NO ────────────────┐
    < TRANSMITTED ? >                                 │
    └──────────────────┘                              │
            │ YES                                     │
            ▼  S02                                    │
┌────────────────────────────────┐                   │
│ START TO OUTPUT OSCILLATION COMMAND │               │
└────────────────────────────────┘                   │
            │                                         │
            ▼  S04                                    │
    ┌──────────────────┐                              │
    <       IS          >                             │
    < VIBRATION OF VEHICLE RELATIVELY >── YES ──┐     │
    < GREAT ? >                                 │     │
    └──────────────────┘                        ▼ S05 │
            │ NO                    ┌──────────────────────────────┐
            │                       │ ADJUST OSCILLATION COMMAND AND │
            │◄──────────────────────│ VIBRATION CONTROL COMMAND      │
            │                       └──────────────────────────────┘
            ▼  S06
┌────────────────────────────────┐
│ OBTAIN INFORMATION ABOUT OSCILLATION OF │
│ ROTATIONAL SPEED OF WHEEL          │
└────────────────────────────────┘
            │
            ▼  S07
┌────────────────────────────────┐
│ OBTAIN WAVEFORM OF DRIVE CURRENT FOR │
│ FIRST ROTARY ELECTRIC MACHINE     │
└────────────────────────────────┘
            │
            ▼  S08
┌────────────────────────────────┐
│ CALCULATE REFERENCE WAVEFORM      │
└────────────────────────────────┘
            │
            ▼  S09
┌────────────────────────────────┐
│ CALCULATE FIRST ATTENUATION RATE AND │
│ SECOND ATTENUATION RATE            │
└────────────────────────────────┘
            │
            ▼  S10
    ┌──────────────────┐
    < IS ABSOLUTE        >
    < DIFFERENCE BETWEEN FIRST AND SECOND >── NO ──┐
    < ATTENUATION RATES GREATER THAN >             │
    < THRESHOLD >                                  │
    └──────────────────┘                           │
            │ YES                                   │
            ▼  S11                                  ▼  S12
┌────────────────────────┐         ┌────────────────────────┐
│ EVALUATE THAT ROAD SURFACE IS IN │  │ EVALUATE THAT ROAD SURFACE IS IN │
│ LOW-FRICTION CONDITION     │         │ HIGH-FRICTION CONDITION    │
└────────────────────────┘         └────────────────────────┘
            │◄──────────────────────────────┘
            ▼  S13
┌────────────────────────┐
│ CALCULATE SLIP RATIO       │
└────────────────────────┘
            │
            ▼  S14
┌────────────────────────┐
│ CALCULATE FRICTION COEFFICIENT $\mu$ │
└────────────────────────┘
            │
            ▼  S15
┌────────────────────────┐
│ CALCULATE $\mu$-GRADIENT    │
└────────────────────────┘
            │
            ▼  S16
┌────────────────────────┐
│ OUTPUT EVALUATION RESULT   │
└────────────────────────┘
            │◄──────────────────────────────────────┘
            ▼
        ( END )
```

# FIG.9

# FIG.10

START

IS EVALUATION REQUEST TRANSMITTED ? — S01 — NO

YES

START TO OUTPUT OSCILLATION COMMAND — S02

START TO OUTPUT VIBRATION CONTROL COMMAND — S03

IS VIBRATION OF VEHICLE RELATIVELY GREAT ? — S04 — YES

ADJUST OSCILLATION COMMAND AND VIBRATION CONTROL COMMAND — S05

NO

OBTAIN INFORMATION ABOUT OSCILLATION OF ROTATIONAL SPEED OF WHEEL — S06

OBTAIN WAVEFORM OF DRIVE CURRENT FOR FIRST ROTARY ELECTRIC MACHINE — S07

REFER TO CORRELATIVE RELATIONSHIP TO THEREBY EVALUATE ROAD-SURFACE CONDITION — S21

OUTPUT EVALUATION RESULT — S22

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019099058 A

- EP 0747691 A2